# EUROPÄISCHE PATENTSCHRIFT

(11) **EP 2 147 262 B1**
(45) Veröffentlichungstag und Bekanntmachung des Hinweises auf die Patenterteilung: **08.12.2010**
(21) Anmeldenummer: 08748734.4
(22) Anmeldetag: 03.04.2008
(51) Int. Cl.: F24J 2/52, F16C 11/02, F16C 11/10

(54) **VORRICHTUNG ZUR AUFSTELLUNG VON SOLARMODULEN**
DEVICE FOR MOUNTING SOLAR MODULES
DISPOSITIF DE MONTAGE DE MODULES SOLAIRES

(30) Priorität: 23.04.2007 DE 102007020234; 23.04.2007 DE 202007006153 U
(43) Veröffentlichungstag der Anmeldung: 27.01.2010
(73) Patentinhaber: Haticon GmbH, 16303 Schwedt (DE)
(72) Erfinder: GENSCHOREK, Gido, 16303 Schwedt (DE)
(74) Vertreter: Kietzmann, Manfred
(86) Internationale Anmeldenummer: PCT/DE2008/000590
(87) Internationale Veröffentlichungsnummer: WO 2008/128506

(56) Entgegenhaltungen:
- WO-A-00/31477
- WO-A-90/12990
- BE-A1- 898 560
- DE-A1- 19 615 872
- DE-A1- 19 736 223
- DE-A1-102004 010 515
- DE-A1-102005 030 039
- DE-B3-102005 007 184
- DE-U1- 20 300 996
- DE-U1-202006 014 047
- DE-U1-202007 008 377
- JP-A- 61 040 063
- JP-A- 2001 090 455
- JP-A- 2003 184 235

## Beschreibung

Die Erfindung betrifft eine Vorrichtung für die Aufstellung von Solarmodulen/Solarpanelen unter Verwendung in das Erdreich eingerammter Stützpfosten, vorzugsweise von Leitplankenpfosten mit E-Querschnitt. Die Vorrichtung ist besonders geeignet für die Aufstellung von Solarmodulen in Reihe nebeneinander und in Südrichtung geneigt.

Aufständerungen von Solarmodulen/Solarpanelen unter Verwendung von Stützpfosten sind bekannt.

Eine erste Gruppe verwendet eine Reihe von Stützpfosten, die kopfseitig durch einen Träger verbunden werden, auf dem die Solarmodule dann direkt nebeneinander angeordnet werden (DE 203 03 257 U1) oder unter Verwendung von in Nord-Süd-Richtung ausgerichteten Querträgern (DE 203 19 065 U1).

Bei der direkten Anordnung kommen u. a. wegen der breiteren Auflage geneigt angeordnete Leistplankenprofile zum Einsatz oder der Träger wird aus zwei parallel und durch Stege miteinander verbundenen Trägern gebildet, wobei die kopfseitige Befestigung im Bereich der Stege erfolgt (DE 20 2006 011 393 U1).

Die Befestigung der Träger oder Stege an den Stützpfosten wird durch Bügel oder Winkel realisiert, die eine Verstellmöglichkeit in der Höhe und seitlich bieten, so dass Positionsungenauigkeiten der gerammten Stützpfeiler ausgleichbar sind und der Träger in einer waagerechten Position montiert werden kann. Der Neigungswinkel für die optimale Sonneneinstrahlung wird ebenfalls durch die Form der Bügel oder Winkel vorbestimmt.

So beschreibt die JP 61 04 0063 A eine Vorrichtung zum Aufstellen von Solarmodulen mittels eines Stützpfostens, an dem miteinander verbundene Träger für den Solarmodul angeordnet sind. Die Träger sind gelenkartig miteinander und verstellbar mit dem Stützpfosten verbunden, so dass die Anstellung des Solarmoduls veränderbar ist. Die Lagerung des Stützpfostens in einer Bodenhülse lässt auch eine Drehung um die Pfostenachse zu.

Nachteilig bei dieser Gruppe von Aufständerungen ist insbesondere die Instabilität bei äußeren Belastungen (Wind, Schnee) bedingt durch nur eine Stützpfostenreihe. Ferner ist mit den vorgefertigten Bügeln bzw. Winkeln der Spielraum in Bezug auf eine ortsspezifische Einstellung eingeschränkt.

Eine zweite Gruppe von Aufständerungen verwendet Doppelreihen von Stützpfosten, die durch Nord-Süd-Träger und/oder Querträger eine Montagebasis für die Solarmodule/-panele schaffen (DE 10 2005 015 346 A1, US-PS 4,966,631).

Die Befestigung der Träger an den Stützpfosten erfolgt auch hier unter Verwendung von Winkeln. Soweit überhaupt auf die Frage von Ausgleichsmöglichkeiten bei der Montage eingegangen wird, sind es auch hier Langlöcher bei den Schraubverbindungen.

Aufgabe der Erfindung ist es, eine Form der Aufständerung von Solarmodulen vorzuschlagen, die ein hohes Maß an Ausgleichsmöglichkeiten für Abweichungen infolge des Rammens der Stützpfosten bietet, wobei die dabei genutzten technischen Mittel universell, d. h. nicht ortsspezifisch einsetzbar sein sollen.

Gelöst wird diese Aufgabe mit den Merkmalen des Anspruches 1, vorteilhafte Ausgestaltungen sind Gegenstand der Unteransprüche.

Die erfindungsgemäße Vorrichtung zur Aufstellung von Solarmodulen/-panelen auf in den Boden des Aufstellortes eingebrachten Stützpfosten, wobei auf oder an den Stützpfosten verbindbare Träger mittels Befestigungsmitteln angeordnet sind, die einen Höhenausgleich und/oder seitlichen Ausgleich von lotrechten Abweichungen der eingebrachten Stützpfosten ermöglichen, sieht als Befestigungsmittel vor
- eine mit dem Stützpfosten verbindbare Schiene,
- einen T- oder L- oder U-förmigen Anschlussflansch mit mindestens einem Verbinder für einen Träger für Solarmodule und
- ein Gelenklager, über das die Verbindung Schiene - Anschlussflansch herstellbar ist, wobei das Gelenklager zwischen einem Innen-und einem Außenring eine Sphärisch gekrümmt ausgebildete Gleitpaarung aufweist.

Durch die vorteilhafte Anordnung eines Gelenklagers wird auf einfache und kostengünstige Weise eine nahezu universelle Ausgleichsmöglichkeit für Abweichungen von der lotrechten Anordnung des jeweiligen Stützpfostens geschaffen.

In einer vorteilhaften Ausführung weist die Schiene im vom Stützpfosten entfernten oberen Endbereich eine Aufnahme für den Außenring des Gelenklagers auf und der Innenring des in die Aufnahme eingesetzten Gelenklagers ist mit dem Anschlussflansch verbindbar.
Natürlich ist auch die umgekehrte Anordnung möglich, nämlich dass ein Schenkel oder Steg des Anschlussflansches eine Aufnahme für den Außenring des Gelenklagers aufweist und der Innenring des in die Aufnahme eingesetzten Gelenklagers mit der Schiene verbindbar ist.

Eine weitere vorteilhafte Ausführung sieht vor, dass der T-förmige Anschlussflansch gabelförmig mit zwei Stegen ausgebildet ist, dessen lichter Abstand so bemessen ist, dass die Stege jeweils stirnseitig über den Innenring des Gelenklagers greifen und durch eine vorzugsweise Bolzenverbindung mit dem Innenring verbindbar sind.

Es verseht sich, dass die am Innenring des Gelenklagers anliegenden Schenkel oder Stege des Anschlussflansches gegenüber der Schiene noch einen Abstand aufweisen müssen, damit die mit dem Gelenklager geschaffene
Verstellmöglichkeit auch nutzbar ist. Anders ausgedrückt, die Innenringbreite des Gelenklagers muss größer sein als die Schienendicke in diesem Bereich.

Als Gelenklager finden solche Anwendung, die zwischen Innen- und Außenring eine sphärisch gekrümmt ausgebildete Gleitpaarung aufweisen. Da die Gleitpaarung im Prinzip nur einmal bei der Montage genutzt wird, kann ein absolut wartungsarmes und nicht auf dauernde dynamische Belastung ausgelegtes Gelenklager verwendet werden.

Eine weitere Ausgleichsmöglichkeit ist dadurch gegeben, dass die Schiene höhenvariabel mit dem Stützpfosten verbindbar ist. Dabei sieht eine vorteilhafte Ausgestaltung vor, dass die Schiene mindestens im Bereich der Befestigung mit dem Stützpfosten als Hohlprofil und/oder Profil mit Außenlängsstegen oder -nuten ausgebildet sind, so dass sie über und/oder in den Stützpfosten oder Teile des Stützpfostens schiebbar ist.

In einer weiteren Ausführung, die in den Zeichnungen dargestellt, ist vorgesehen, die Schiene geteilt auszubilden, in eine Anschlussteilschiene für den Stützpfosten und eine Teilschiene zur Herstellung der Verbindung mit dem Anschlussflansch, wobei die beiden Teilschienen miteinander verbindbar sind.

Die Stützpfosten werden bevorzugt doppelreihig angeordnet, wobei die auf den Anschlussflanschen angeordneten Träger jeweils in Nord-Süd-Richtung verlaufen, d.h. zwei Stützpfosten verbinden und diese Träger durch durchgehende Querträger verbunden sind, auf denen die Solarmodule angeordnet sind.

Die Erfindung soll anhand von Ausführungsbeispielen erläutert werden. Es zeigen:
- Fig. 1:: die einzelnen Bauteile der Vorrichtung
- Fig. 2:: die geteilt ausgebildete Schiene
- Fig. 3:: die Anschlussflanschanordnung und
- Fig. 4:: die Anschlussflanschbefestigung.

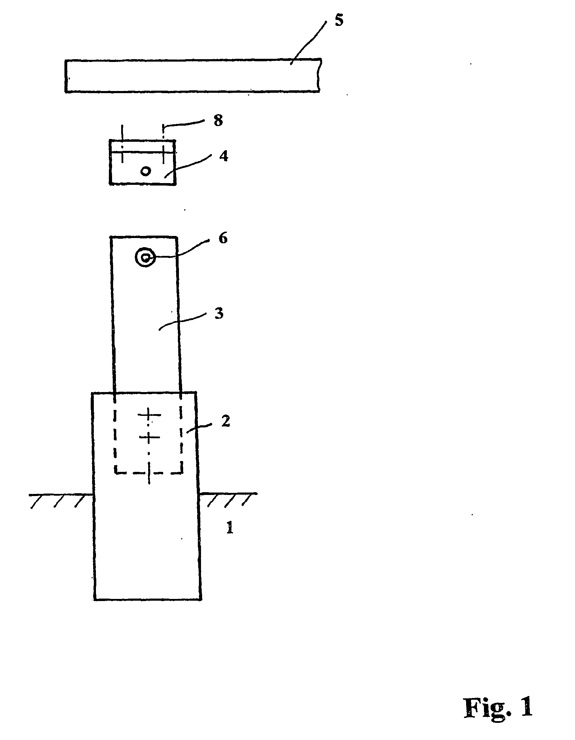

**Fig. 1** zeigt die wesentlichen Bestandteile der Vorrichtung zur Aufstellung von Solarmodulen/-panelen in einer exposeähnlichen Darstellung.

In den Boden 1 des Aufstellortes ist ein Stützpfosten 2, vorzugsweise ein Leitplankenpfosten mit Σ-Querschnitt eingerammt. Der Stützpfosten 2 wird mit dem Träger 5 mittels Befestigungsmitteln verbunden, die umfassen
- eine mit dem Stützpfosten 2 verbindbare Schiene 3,
- einen T- oder L- oder U-förmigen Anschlussflansch 4 mit mindestens einem Verbinder 8 für den Träger 5 und
- ein Gelenklager 6, über das die Verbindung Schiene 3 - Anschlussflansch 4 herstellbar ist.

Das Gelenklager 6 ist in vom Stützpfosten 2 entfernten oberen Endbereich der Schiene 3 in einer Aufnahme für den Außenring des Gelenklagers angeordnet. Der Innenring des in die Aufnahme eingesetzten Gelenklagers 6 ist mit dem Anschlussflansch 4 verbindbar.

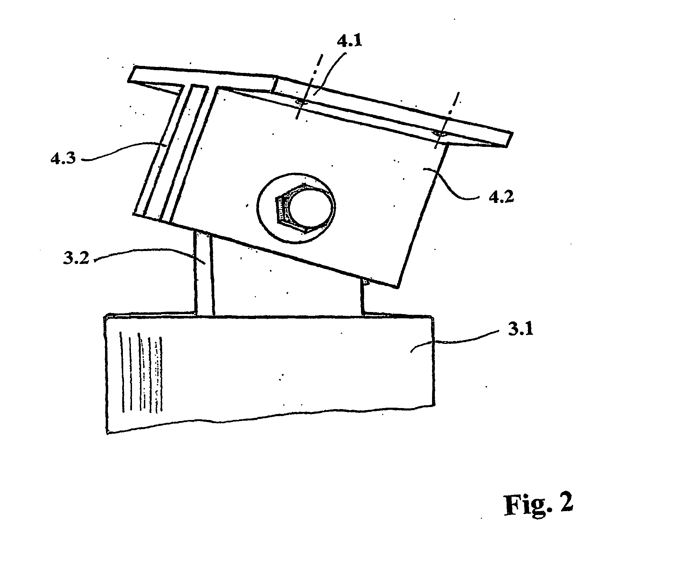

In den **Fig. 2-4** ist eine bevorzugte Ausführungsform der Vorrichtung in Details dargestellt. Die Schiene 3 mit Anschlussflansch 4 zur Anbindung des Trägers 5 ist hier als geteilte Schiene mit einer Anschlussschiene 3.1 für den Stützpfosten 2 und einer Teilschiene 3.2 für den Anschluss des Anschlussflansches 4 ausgebildet. Die Anschlussteilschiene 3.1 für den Stützpfosten 2 ist als Hohlprofil und/oder Profil mit Außenlängsstegen oder -nuten 9 ausgebildet, so dass sie über und/oder in den Stützpfosten 2 oder Teile des Stützpfostens 2 schiebbar ist.

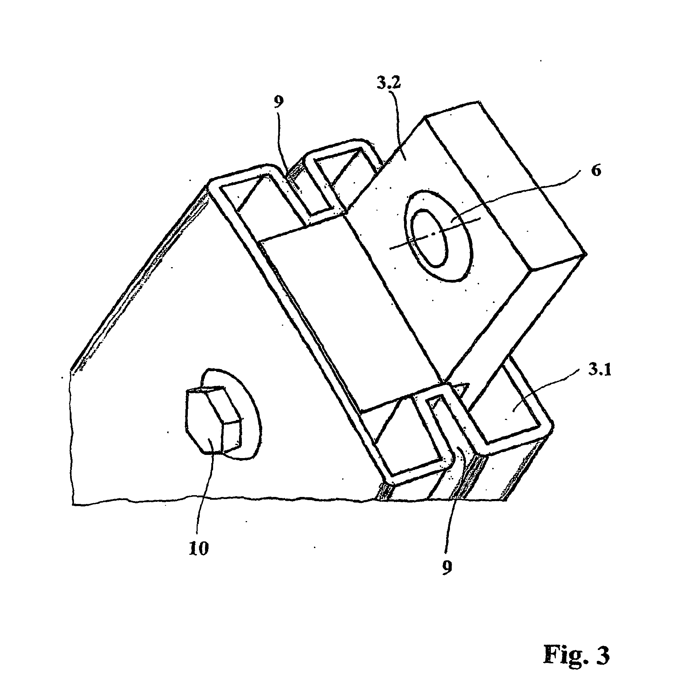

Wie aus **Fig. 3** ersichtlich, ist die Anschlussteilschiene 3.1 als Hohlprofil ausgebildet mit seitlichen Nuten 9. Diese sind so bemessen, dass beim Aufstecken der Anschlussteilschiene 3.1 auf den Σ-förmigen Stützpfosten 2 die nach innen gekröpften Σ-Schenkel des Stützpfostens 2 in diese Nute 9 greifen und so ein seitlicher Formschluss zwischen der Anschlussteilschiene 3.1 und dem Stützpfosten 2 entsteht. Die Anschlussteilschiene 3.1 für den Stützpfosten 2 wird mit diesem höhenvariabel verschraubt.

Die Teilschiene 3.2 ist in ein Hohlprofil der Anschlussschiene 3.1 eingesteckt und mit dieser verschraubt. Dies kann in einer starren durch die Bohrungen und Anschläge festgelegten Position erfolgen. Möglich wäre aber auch die Nutzung der Freiheitsgrade: Schwenkung um den Verbindungsbolzen 10 und/oder Höhenverstellung durch eine Langlochverwendung.

Die Teilschiene 3.2 enthält das Gelenklagers 6, dessen Innenring die Teilschiene 3.2 aussen überragt und mit dem Anschlussflansch 4 verbindbar ist.

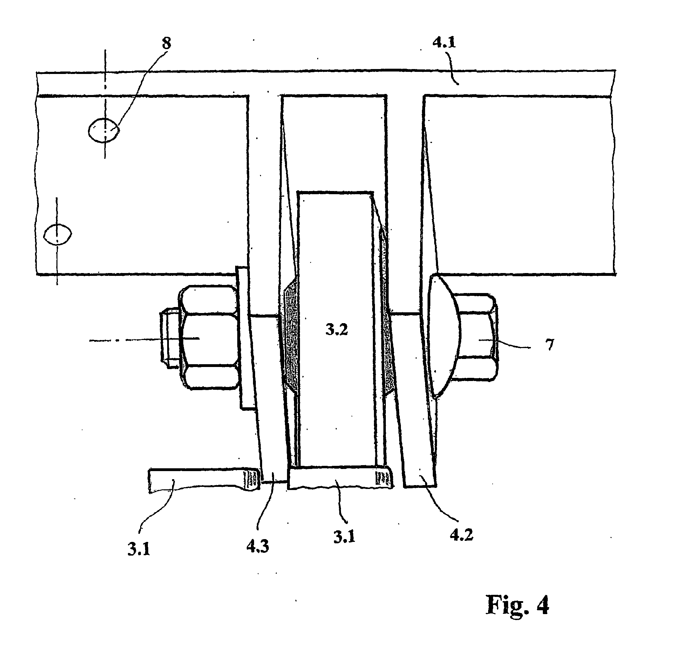

In **Fig. 4** ist deutlich erkennbar, dass der T-förmige Anschlussflansch 4 gabelförmig mit zwei Stegen 4.2, 4.3 ausgebildet ist, dessen lichter Abstand so bemessen ist, dass die Stege 4.2, 4.3 jeweils stirnseitig über den Innenring des Gelenklagers 6 greifen und durch eine vorzugsweise Bolzenverbindung 7 mit dem Innenring verbindbar sind.

Der Anschlussflansch 4 kann so gegenüber einer waagerechten Ebene in alle Richtungen geneigt werden und damit Abweichungen von der lotrechten Anordnung der Stützpfosten 2 ausgleichen. Höhendifferenzen lassen sich durch Längsverschiebung der Anschlussteilschiene 3.1 gegenüber dem Stützpfosten 2 ausgleichen.

Über die Verbinder 8 in Form von Bohrungen im Balken 4.1 des T-förmigen Anschlussflansches 4 folgt die Befestigung der Träger 5.

Da die Funktion des oder der Gelenklager 6 der einzelnen Stützpfosten 2 nicht mit der Verschraubung mit den Anschlussflanschen 4 aufgehoben ist, erfolgt beim Anziehen der Verbinder 8 automatisch auch ein Ausrichten der Anschlussflansche 4 auf die Anschlussfläche des Trägers 5. Bei mehreren Stützpfosten 2, Trägern 5 und Querträgern richtet sich das ganze Gerüst in sich aus und gewährleistet eine durchgehende ebene Auflage für die in Reihe und nebeneinander anzuordnenden Solarmodule.

### Bezugszeichenliste

- 1: Boden
- 2: Stützpfosten
- 3: Schiene
- 3.1: Anschlussteilschiene für Stützpfosten
- 3.2: Teilschiene für Verbindung mit Anschlussflansch
- 4: Anschlussflansch
- 4.1: Kopfbalken
- 4.2: Steg
- 4.3: Steg
- 5: Träger
- 6: Gelenklager
- 7: Verschraubung
- 8: Verbinder
- 9: Nute
- 10: Verbindungsbolzen

## Patentansprüche

1. Vorrichtung zur Aufstellung von Solarmodulen/-panelen bestehend aus in den Boden (1) des Aufstellortes eingebrachten Stützpfosten (2) und auf oder an diesen angeordneten verbindbaren Trägern (5) für die Solarmodule/-panele,
wobei für die Verbindung Stützpfosten (2) - Träger (5) Befestigungsmittel eingesetzt sind, die einen Höhenausgleich und/oder seitlichen Ausgleich von lotrechten Abweichungen der eingebrachten Stützpfosten (2) ermöglichen, wobei
die Befestigungsmittel umfassen eine mit dem Stützpfosten (2) verbindbare Schiene (3), einen T- oder L- oder U-förmigen Anschlussflansch (4) an die Schiene (3) mit mindestens einem Verbinder (8) für einen Träger (5) und ein Gelenklager (6), über das die Verbindung Schiene (3) - Anschlussflansch (4) herstellbar ist **dadurch gekenzeichnet, dass** das Gelenklager (6) zwischen einem Innen- und einem Außenring eine sphärisch gekrümmt ausgebildete Gleitpaarung aufweist.

2. Vorrichtung nach Anspruch 1, **dadurch gekennzeichnet, dass**
die Schiene (3) in vom Stützpfosten (2) entfernten oberen Endbereich eine Aufnahme für den Außenring des Gelenklagers (6) aufweist und der Innenring des in die Aufnahme eingesetzten Gelenklagers (6) mit dem Anschlussflansch (4) verbindbar ist.

3. Vorrichtung nach Anspruch 1, **dadurch gekennzeichnet, dass**
ein Schenkel oder Steg des Anschlussflansches (4) eine Aufnahme für den Außenring des Gelenklagers (6) aufweist und der Innenring des in die Aufnahme eingesetzten Gelenklagers (6) mit der Schiene (3) verbindbar ist.

4. Vorrichtung nach Anspruch 1 oder 2, **dadurch gekennzeichnet, dass**
ein T-förmiger Anschlussflansch (4) gabelförmig mit zwei Stegen (4.2, 4.3) ausgebildet ist, dessen lichter Abstand so bemessen ist, dass die Stege (4.2, 4.3) jeweils stirnseitig über den Innenring des Gelenklagers (6) greifen und durch eine vorzugsweise Bolzenverbindung mit dem Innenring verbindbar sind.

5. Vorrichtung nach einem der Ansprüche 1 bis 4, **dadurch gekennzeichnet, dass**
die am Innenring des Gelenklagers (6) anliegenden Schenkel oder Stege des Anschlussflansches (4) gegenüber der Schiene (3) einen Abstand aufweisen.

6. Vorrichtung nach einem der Ansprüche 1 bis 5, **dadurch gekennzeichnet, dass**
die Schiene (3) geteilt ausgebildet ist, in eine Anschlussteilschiene (3.1) für den Stützpfosten (2) und eine Teilschiene (3.2) zur Herstellung der Verbindung mit dem Anschlussflansch (4), wobei die beiden Teilschienen miteinander verbindbar sind.

7. Vorrichtung nach Anspruch 6, **dadurch gekennzeichnet, dass**
die Verbindung zwischen der Anschlussteilschiene (3.1) für den Stützpfosten (2) und der Teilschiene (3.2) zur Herstellung der Verbindung mit dem Anschlussflansch (4) über mindestens einen Freiheitsgrad bei der Verbindungsherstellung verfügt.

8. Vorrichtung nach einem der Ansprüche 1 bis 7, **dadurch gekennzeichnet, dass**
die Schiene (3) oder die Anschlussteilschiene (3.1) für den Stützpfosten (2) höhenvariabel mit dem Stützpfosten (2) verbindbar ist.

9. Vorrichtung nach einem der Ansprüche 1 bis 8, **dadurch gekennzeichnet, dass**
die Schiene (3) oder die Anschlussteilschiene (3.1) für den Stützpfosten (2) als Hohlprofil und/oder Profil mit Außenlängsstegen oder -nuten (9) ausgebildet sind, so dass sie über und/oder in den Stützpfosten (2) oder Teile des Stützpfostens (2) schiebbar ist.

10. Vorrichtung nach einem der Ansprüche 6 bis 9, **dadurch gekennzeichnet, dass**
die Teilschiene (3.2) in das Hohlprofil der Anschlussteilschiene (3.1) für den Stützpfosten (2) einsetzbar ist.

11. Vorrichtung nach einem der Ansprüche 1 bis 10, **dadurch gekennzeichnet, dass**
der Verbinder (8) aus einer oder mehreren Bohrungen im freien Steg des L-Profils oder im Kopfbalken (4.1) des T-Profils des Anschlussflansches (4) mit darin einsetzbaren Bolzen besteht.

12. Vorrichtung nach einem der Ansprüche 1 bis 11, **dadurch gekennzeichnet, dass**
die Stützpfosten (2) doppelreihig angeordnet sind, die Träger (5) jeweils in Nord-Süd-Richtung verlaufen und die Träger (5) durch durchgehende Querträger verbunden sind, auf denen die Solarmodule angeordnet sind.

## Claims

1. A device for mounting solar modules/panels, consisting of props (2) which are introduced into the ground (1) of the mounting location and supports (5) for the solar modules/panels, which supports are disposed on top of or on said props and can be connected thereto,
wherein the connection between the prop (2) and the support (5) is achieved by means of fastening means which allow for vertical compensation and/or lateral compensation of deviations of the introduced props (2) from the perpendicular, wherein
the fastening means comprise a rail (3) which can be connected to the prop (2), a T-shaped or L-shaped or U-shaped connecting flange (4) to the rail (3) with at least one connector (8) for a support (5), and a rocker bearing (6) which allows the connection between the rail (3) and the connecting flange (4) to be established, **characterized in that**
the rocker bearing (6) comprises a pair of sliding contact surfaces which are spherically curved between an inner ring and an outer ring.

2. A device according to claim 1, **characterized in that**
the rail (3), in the upper end section which is distant from the prop (2), comprises a recess for the outer ring of the rocker bearing (6), and the inner ring of said rocker bearing (6) which has been inserted in the recess can be connected to the connecting flange (4).

3. A device according to claim 1, **characterized in that** a limb or leg of the connecting flange (4) comprises a recess for the outer ring of the rocker bearing (6), and the inner ring of said rocker bearing (6) which has been inserted in the recess can be connected to the rail (3).

4. A device according to claim 1 or 2, **characterized in that**
a T-shaped connecting flange (4) is designed so as to be fork-shaped with two legs (4.2, 4.3), the clear space between which is dimensioned such that the legs (4.2, 4.3) fit over the inner ring of the rocker bearing (6) on the ends thereof in each case and can be connected to said inner ring, preferably by means of a bolt connection.

5. A device according to any one of claims 1 to 4, **characterized in that**
the limbs or legs of the connecting flange (4) which are in contact with the inner ring of the rocker bearing (6) are arranged at a distance from the rail (3).

6. A device according to any one of claims 1 to 5, **characterized in that**
the rail (3) is designed in two parts, divided into a partial connecting rail (3.1) for the prop (2) and a partial rail (3.2) for establishing the connection to the connecting flange (4), wherein the two partial rails can be connected to each other.

7. A device according to claim 6, **characterized in that** the connection between the partial connecting rail (3.1) for the prop (2) and the partial rail (3.2) for establishing the connection to the connecting flange (4) have at least one degree of freedom when the connection is being established.

8. A device according to any one of claims 1 to 7, **characterized in that**
the rail (3) or the partial connecting rail (3.1) for the prop (2) can be connected to the prop (2) at variable heights.

9. A device according to any one of claims 1 to 8, **characterized in that**
the rail (3) or the partial connecting rail (3.1) for the prop (2) is designed as a hollow profile and/or a profile comprising longitudinal outer legs or grooves (9), so that it can be push-fitted on and/or into the prop (2) or parts of the prop (2).

10. A device according to any one of claims 6 to 9, **characterized in that**
the partial rail (3.2) can be inserted in the hollow profile of the partial connecting rail (3.1) for the prop (2).

11. A device according to any one of claims 1 to 10, **characterized in that**
the connector (8) consists of one or several bores in the free leg of the L-profile or in the head beam (4.1) of the T-profile of the connecting flange (4) with bolts that can be inserted therein.

12. A device according to any one of claims 1 to 11, **characterized in that**
the props (2) are arranged in two rows, each of the supports (5) extends in the north-south direction, and the supports (5) are connected by continuous transverse supports on which the solar modules are arranged.

## Revendications

1. Dispositif de montage de modules/panneaux solaires, composé de montants d'appui (2) mis en place dans le sol (1) du lieu d'implantation et de supports (5) des modules/panneaux solaires pouvant être raccordés, disposés sur ou contre ces montants,
des moyens de fixation étant mis en oeuvre pour le raccordement montants d'appui (2) - supports (5), qui permettent une compensation de hauteur et/ou une compensation latérale d'écarts verticaux des montants d'appui (2) mis en place,
les moyens de fixation comprenant un rail (3) pouvant être raccordé au montant d'appui (2), une bride de raccordement (4), en T ou en L ou en U, au rail (3) avec au moins un élément de raccordement (8) pour un support (5) et une articulation à rotule (6) par le biais de laquelle le raccordement rail (3) - bride de raccordement (4) peut être établi, **caractérisé en ce que** l'articulation à rotule (6) présente, entre une bague intérieure et une bague extérieure, un appariement glissant constitué de façon courbée de manière sphérique.

2. Dispositif selon la revendication 1, **caractérisé en ce que**
le rail (3) présente, dans la zone d'extrémité supérieure éloignée du montant d'appui (2), un logement pour la bague extérieure de l'articulation à rotule (6), et **en ce que** la bague intérieure de l'articulation à rotule (6) introduite dans le logement peut être raccordée à la bride de raccordement (4).

3. Dispositif selon la revendication 1, **caractérisé en ce**
**qu'**une branche ou une nervure de la bride de raccordement (4) présente un logement pour la bague extérieure de l'articulation à rotule (6), et en ce que la bague intérieure de l'articulation à rotule (6) introduite dans le logement peut être raccordée au rail (3).

4. Dispositif selon la revendication 1 ou la revendication 2, **caractérisé en ce qu'**une bride de raccordement (4) en forme de T est constituée en forme de fourche avec deux nervures (4.2, 4.3), et dont l'intervalle libre est dimensionné de sorte que les nervures (4.2, 4.3) engrènent respectivement côté frontal sur la bague intérieure de l'articulation à rotule (6) et peuvent être raccordées à la bague intérieure par de préférence un boulonnage.

5. Dispositif selon une des revendications 1 à 4, **caractérisé en ce que**
les branches ou nervures de la bride de raccordement (4) qui jouxtent la bague intérieure de l'articulation à rotule (6) présentent un écart par rapport au rail (3).

6. Dispositif selon une des revendications 1 à 5, **caractérisé en ce que**
le rail (3) est constitué de façon divisée, en un rail partiel de raccordement (3.1) pour le montant d'appui (2) et en un rail partiel (3.2) pour la réalisation du raccordement à la bride de raccordement (4), les deux rails partiels pouvant être raccordés l'un à l'autre.

7. Dispositif selon la revendication 6, **caractérisé en ce que**
le raccordement entre le rail partiel de raccordement (3.1) pour le montant d'appui (2) et le rail partiel (3.2) pour la réalisation du raccordement à la bride de raccordement (4) dispose d'au moins un degré de liberté lors de la réalisation du raccordement.

8. Dispositif selon une des revendications 1 à 7, **caractérisé en ce que**
le rail (3) ou le rail partiel de raccordement (3.1) pour le montant d'appui (2) peut être raccordé au montant d'appui (2) de façon variable en hauteur.

9. Dispositif selon une des revendications 1 à 8, **caractérisé en ce que**
le rail (3) ou le rail partiel de raccordement (3.1) pour le montant d'appui (2) est constitué en tant que profilé creux et/ou en tant que profilé avec des nervures ou rainures (9) longitudinales extérieures de sorte qu'il peut être poussé sur et/ou dans le montant d'appui (2) ou des parties du montant d'appui (2).

10. Dispositif selon une des revendications 6 à 9, **caractérisé en ce que**
le rail partiel (3.2) peut être inséré dans le profilé creux du rail partiel de raccordement (3.1) pour le montant d'appui (2).

11. Dispositif selon une des revendications 1 à 10, **caractérisé en ce que**
l'élément de raccordement (8) se compose d'un ou de plusieurs alésages dans la nervure libre du profilé en L ou dans la barre de tête (4.1) du profilé en T de la bride de raccordement (4) avec des boulons qui peuvent y être introduits.

12. Dispositif selon une des revendications 1 à 11, **caractérisé en ce que**
les montants d'appui (2) sont disposés en deux rangées, les supports (5) sont respectivement disposés dans une direction nord-sud, et les supports (5) sont raccordés par des traverses continues sur lesquelles sont disposés les modules solaires.
